# EUROPÄISCHE PATENTANMELDUNG

(11) **EP 1 972 839 A2**
(43) Veröffentlichungstag der Anmeldung: **24.09.2008**
(21) Anmeldenummer: 08005107.1
(22) Anmeldetag: 19.03.2008
(51) Int. Cl.: F16K 15/02, F16K 15/06, F16K 15/08

(54) **Rückschlagventil**

(30) Priorität: 20.03.2007 DE 202007004023 U
(71) Anmelder: Reiche, Marion, 33699 Bielefeld (DE)
(72) Erfinder: Reiche, Marion, 33699 Bielefeld (DE)
(74) Vertreter: Steinmeister, Helmut

(57) **Zusammenfassung**

Rückschlagventil mit einer Trennwand (10) in einem durchströmten Ventilgehäuse, welche Trennwand eine Durchlaßöffnung (12) aufweist, die durch eine federnd in Schließrichtung vorgespannte und durch Strömungsdruck von der Trennwand abhebbare Ventilplatte (30) verschließbar ist, dadurch gekennzeichnet, dass die Ventilplatte (30) in ihrer Fläche eine weitere Öffnung (38) aufweist, die durch eine federnd gegen die Ventilplatte (30) vorgespannte, von der Ventilplatte (30) durch Strömungsdruck abhebbare zweite Ventilplatte (34) verschließbar ist.

## Beschreibung

Die Erfindung betrifft ein Rückschlagventil mit einer Trennwand in einem durchströmten Ventilgehäuse, welche Trennwand eine Durchlaßöffnung aufweist, die durch eine federnd in Schließrichtung vorgespannte und durch Strömungsdruck von der Trennwand abhebbare Ventilplatte verschließbar ist.

Rückschlagventile dieser Art sind beispielsweise in Warmwasser-Heizungssystemen bekannt. Sie werden u. a. verwendet, um sicherzustellen, dass Wasser aufgrund der Konvexion oder aufgrund der Wirkung einer Umwälzpumpe eine vorgegebene Strömungsrichtung beibehält und ein Rückstrom verhindert wird. Als Beispiel aus dem Stand der Technik wird daher auf die DE 203 09 537 U1 hingewiesen. Da bei Einsatzfällen dieser Art häufig beengte Platzverhältnisse für den Einbau des Rückschlagventils bestehen oder sogar eine Nachrüstung des Rückschlagventils in vorhandene Systeme notwendig ist, besteht das Rückschlagventil beispielsweise nur aus einer flachen Platte, die als Trennwand zwischen zwei Rohrflansche eingeklemmt werden kann und die eine Durchlaßöffnung aufweist, die durch eine Ventilplatte überdeckt ist, die durch Strömungsdruck von der Trennwand abhebbar und andererseits durch Federvorspannung verschließbar ist. Auch zwei verbundene Rohre können ein Ventilgehäuse im Sinne der Erfindung bilden. Die Erfindung soll aber auch Ausführungsformen einschließen, bei denen die Trennwand den Boden eines vollständigen Ventilgehäuses bildet, in dem die Ventilplatte verschiebbar gerührt ist.

Aufgrund der beengten Platzverhältnisse kann die Ventilplatte im allgemeinen nur geringfügig von der Trennwand abgehoben werden, so dass das in Strömungsrichtung strömende Wasser nur einen Ringspalt zwischen der Trennwand und der Ventilplatte zur Verfügung hat. Insbesondere, wenn eine erfindungsgemäße Ausführungsform verwendet wird, die auf einer zwischen zwei Rohrflanschen eingeklemmten Trennwand ausgebildet ist, kommt es bei der Umlenkung des Wasserstroms am äußeren Umfang der Ventilplatte zwischen dieser und der angrenzenden Rohrwand zu einer starken Abbremsung des Wasserstroms. Der Wasserstrom wird also erheblich gedrosselt und im gesamten System führt die Bauart des Ventils zu erheblichen Druckverlusten.

Der Erfindung liegt daher die Aufgabe zugrunde, ein Rückschlagventil der beschriebenen Art zu schaffen, das bei platzsparender Bauweise nur geringere Strömungsverluste verursacht.

Diese Aufgabe wird bei einem erfindungsgemäßen Rückschlagventil dadurch gelöst, dass die Ventilplatte in ihrer Fläche eine weitere Öffnung aufweist, die durch eine zweite, durch Strömungsdruck von der ersten Ventilplatte abhebbare und federnd in die Stellung vorgespannte Ventilplatte verschließbar ist.

Die erfindungsgemäße Lösung hat nicht nur den Vorteil, dass sie zwei Rückschlagventile hintereinanderschaltet und auf diese Weise eine Vergrößerung des Strömungsdurchlasses ermöglicht, sondern dass die Strömungsbahn des zweiten Rückschlagventils zu einer Gesamtströmung führt, die wesentlich geringere Druckverluste verursacht.

Soweit für das Verständnis der vorliegenden Beschreibung erforderlich, soll zur Verdeutlichung jeweils von einem ersten und einem zweiten Rückschlagventil, einer ersten und zweiten Ventilplatte usw., gesprochen werden.

Die erste und zweite Ventilplatte sind beispielsweise kreisförmige Platten, die konzentrisch zueinander angeordnet und auf einem gemeinsamen konzentrischen Schaft geführt sind.

Vorzugsweise ist der Schaft in einem Steg verankert, der die erste Durchlaßöffnung, die sich in der Trennwand befindet. überbrückt. Die zweite Durchlaßöffnung, die sich in der ersten Ventilplatte befindet, wird beispielsweise ebenfalls durch einen Steg oder eine andere Konstruktion überbrückt.

Auf dem Schaft befindet sich vorzugsweise eine Schraubenfeder, die gegebenenfalls beide Ventilplatten in Schließrichtung vorspannt. Der Schaft erstreckt sich daher vorzugsweise in stromabwärtige Richtung.

Die beiden. Ventilplatten werden vorzugsweise durch eine gemeinsame Feder in die geschlossene Stellung vorgespannt. Es Ist allerdings auch möglich, einzelne Federn mit unterschiedlicher Federkennung zu verwenden. wenn beispielsweise die zweite Ventilplatte nur bei einem höheren Strömungsdruck öffnen soll.

Falls eine gemeinsame Feder eingesetzt wird, eignet sich eine Schraubenfeder, die um den Schaft herum angeordnet ist und sich an einem Kopfstück am Ende des Schafts abstützen kann. Diese Feder, eine Schraubendruckfeder, spannt dabei die beiden Ventilplatten gemeinsam gegen die Trennwand vor.

Der Schaft weist vorzugsweise einen Abschnitt größeren Durchmessers auf, der einem Abschnitt kleineren Durchmessers in Richtung des Kopfstücks folgt. Auf diese Weise kann der maximale Weg oder Hub der Ventilplatten begrenzt werden.

Es ist aber auch möglich, durch unterschiedliche Schaftdurchmesser den maximalen Verschiebeweg für die beiden Ventilplatten unterschiedlich auszulegen.

Das erfindungsgemäße Prinzips eines Rückschlagventils mit doppelter Ventilplatte läßt sich auch in anderer Weise realisieren. Während bei der zuvor besprochenen Ausführungsform das eingangs angesprochene Ventilgehäuse nur symbolisch durch zwei aufeinanderfolgende Rohre gebildet wurde, kann auch ein echtes Ventilgehäuse vorgesehen sein, dessen Boden die erfindungsgemäße Trennwand bildet, die einen Durchlaß aufweist, der durch eine Ventilplatte verschlossen werden kann. Vorzugsweise ist bei derartigen Ausführungsformen der Schaft fest mit der ersten Ventilplatte verbunden und in einem Steg des Ventilgehäuses axial verschiebbar. Nähere Einzelheiten werden sich aus der später folgenden Beschreibung von Ausführungsbeispielen ergeben.

Im folgenden werden bevorzugte Ausführungsbeispiele der Erfindung anhand der beigefügten Zeichnung näher erläutert.
- Fig. 1: ist ein senkrechter Schnitt durch ein erfindungsgemäßes Rückschlagventil: und
- Fig. 2: zeigt das Rückschlagventil in einer Explosionsdarstellung;
- Fig. 3: zeigt eine weitere Ausführungsform der vorliegenden Erfindung; und
- Fig. 4: zeigt noch eine weitere Ausführungsform der vorliegenden Erfindung: und
- Fig. 5: zeigt ein Druckverlustdiagramm zur Erläuterung der Wirkung des erfindungsgemäßen Rückschlagventils.

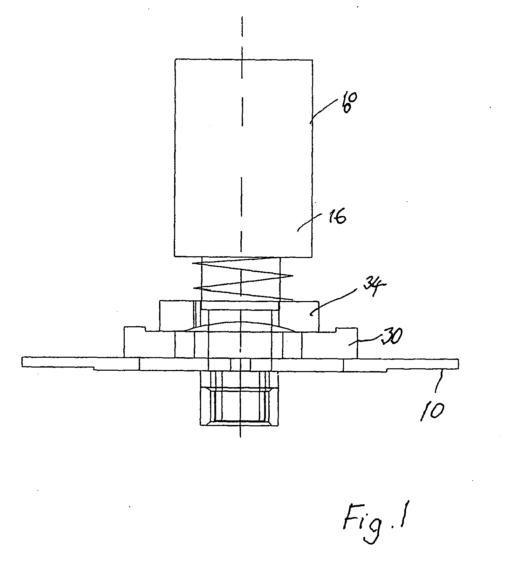

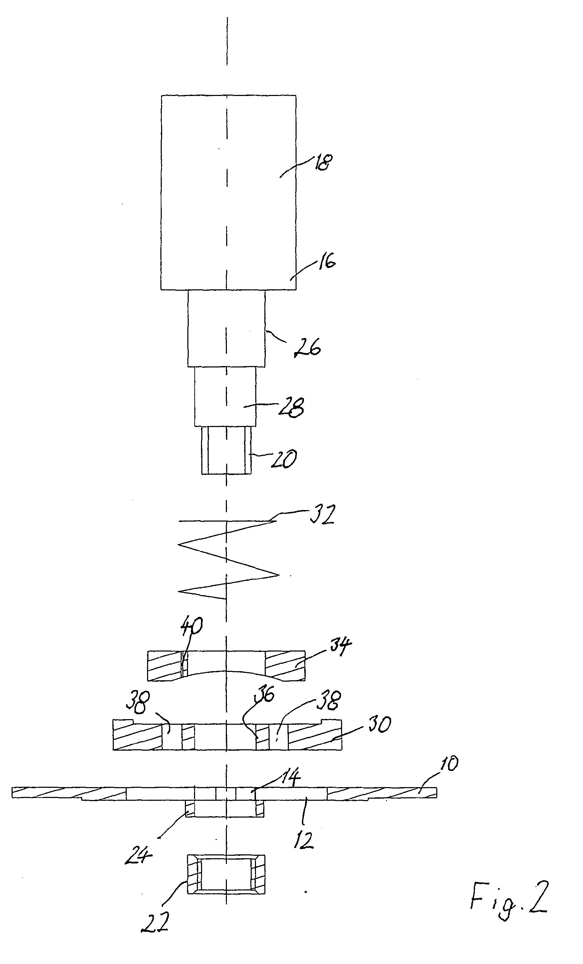

Für die folgende Beschreibung soll zugleich auf Fig. 1 und 2 Bezug genommen werden.

Ein erfindungsgemäßes Rückschlagventil ist auf einer Platte, insbesondere kreisförmigen Platte aufgebaut, die hier als Trennwand 10 bezeichnet wird, die zwischen zwei Flanschen von verbundenen Rohren in einem vorhandenen Rohrleitungssystem befestigt werden kann, wie es in der genannten DE 203 09 537 U1 gezeigt ist. Die Trennwand 10 weist eine Durchlaßöffnung 12 auf, die hier, soweit für das Verständnis erforderlich, als erste Durchlaßöffnung bezeichnet werden soll. Die Durchlaßöffnung 12 wird in nicht gezeigter Weise durch einen diametralen Steg überbrückt, der in seinem Mittelbereich eine Bohrung 14 aufweist.

Mithilfe dieser Bohrung 14 ist auf dem Steg ein Schaft 16 befestigt, der sich von dem Steg aus in die stromabwärtige Richtung erstreckt, die in beiden Zeichnungen auf der oberen Seite liegt.

Der Schaft 16 weist an seinem oberen, stromabwärtigen Ende ein Kopfstück 18 größeren Durchmessers auf, während sich der Durchmesser des Schafts nach unten, also stromaufwärtiger Richtung, mehr und mehr über mehrere Stufen verjüngt. An seinem unteren Ende befindet sich ein Gewindeabschnitt 20, der durch die Bohrung 14 im Steg innerhalb der ersten Durchlaßöffnung 12 hindurchgeführt werden kann, so dass, wie in Fig. 1 gezeigt, der Schaft auf dem Steg der Trennwand 10 durch Aufdrehen einer Mutter 22 und Einfügen eines Diatanzringes 24 festgelegt werden kann.

Auf diese Weise werden die Trennwand 10 und der Schaft 16 zu einer festen, im Rohrsystem festgelegten Einheit verbunden.

Zwischen dem Kopfstück 18 und dem Gewindeabschnitt 20 befinden sich zwei Führungsabschnitte 26,28, die im Durchmesser vom Kopfstück 18 bis zum Gewindeabschnitt 20 stufenförmig abnehmen. Diese Führungsabschnitte 26.28 haben eine glatte äußere Oberfläche.

Der Führungsabschnitt 28, der unterhalb des Führungsabschnitts 26 liegt, bildet insbesondere die Führung für eine Ventilplatte 30, die die erste Durchlaßöffnung 12 in der Trennwand 10 verschließen kann, wenn sie durch eine Schraubendruckfeder 32, die sich auf den beiden Führungsabschnitten 26.28 befindet, nach unten gegen die Trennwand 10 gedrückt wird. Insoweit handelt es sich um eine Rückschlagventilanordnung, wie sie im Prinzip bekannt ist. Die Stufe zwischen den Führungsabschnitten 26 und 28 bildet einen Anschlag für die erste Ventilplatte 30.

Wenn die Ventilplatte 30 von ihrem Sitz angehoben wird, strömt das Wasser ringsrum nach außen durch einen Ringspalt zwischen der Trennwand 10 und der Ventilplatte 30. Dadurch wird das Wasser verhältnismäßig stark gedrosselt, so dass entsprechende Druckverluste in dem Wasserstrom entstehen.

Gemäß der vorliegenden Erfindung besteht jedoch noch eine zweite Ventilöffnung, die durch eine zweite Ventilplatte geöffnet und geschlossen wird, wie anschließend erläutert werden soll. Die erste Ventilplatte 30 weist in ihrem Zentrum eine Bohrung 36 auf, die zur Führung auf dem Führungsabschnitt 28 kleineren Durchmessers dient, und im Umkreis dieser Bohrung 36 eine Anzahl von Durchlaßöffnungen 38 auf, die durch die zweite Ventilplatte 34 verschlossen werden können, wenn diese auf der ersten Ventilplatte 30 liegt.

Die Verteilung auf mehrere um Umfang verteilte Durchlaßöffnungen 38 ist erforderlich da die erste Ventilplatte 30 auf dem Schaft geführt wird, so dass das Material der Platte 30 am Umfang der Bohrung 36 bestehenbleiben muß.

Die Durchlaßöffnungen 38 bilden in ihrer Gesamtheit eine Durchlaßöffnung in der ersten Ventilplatte 30, die die Durchlaßfläche für das Wasser in ihrer Gesamtheit erhöht.

Wie erwähnt, wird auch die zweite Ventilplatte 34 mithilfe der Schraubendruckfeder 32 in Schließrichtung vorgespannt. Die zweite Ventilplatte 34 schließt die im Umfang verteilten Durchlaßöffnungen 38. wenn das Ventil geschlossen wird. Die zweite Ventilplatte 34 wird auf dem Führungsabschnitt 26 größeren Durchmessers geführt.

Wie die Situation aussieht, wenn das Rückschlagventil die größtmögliche Öffnungsstellung aufweist, läßt sich zumindest annähernd aus Fig. 2 entnehmen. In Fig. 2 ist die erste Ventilplatte 30 von der Trennwand 10 abgehoben dargestellt. Das gleiche gilt für die zweite Ventilplatte 34 in bezug auf die erste Ventilplatte 30. Das eintreffende Wasser kann in diesem Stadium einerseits den ringförmigen Spalt zwischen der Trennwand 10 und der ersten Ventilplatte 30 hindurchströmen. Gleichzeitig kann aber das Wasser durch die Durchlaßöffnungen 38 in der ersten Ventilplatte 30 hindurchströmen. Dadurch wird die Drosselwirkung, die sich ergibt, wenn sich das gesamte Wasser um den äußeren Umfang der ersten Ventilplatte herum bewegen muß, erheblich entschärft.

Wie aus Fig. 2 hervorgeht, ist die obere Ventilplatte 34 an ihrer Unterseite nach oben leicht gewölbt, und eine Entlüftungsbohrung 40 durchläuft die zweite Ventilplatte 34 in senkrechter Richtung. Diese Entlüftungsbohrung dient dazu. zu verhindern, dass an der Unterseite der Trennwand ein Unterdruck entsteht. Derartige Entlüftungsmaßnahmen sind in anderer Ausführungsform an sich bekannt.

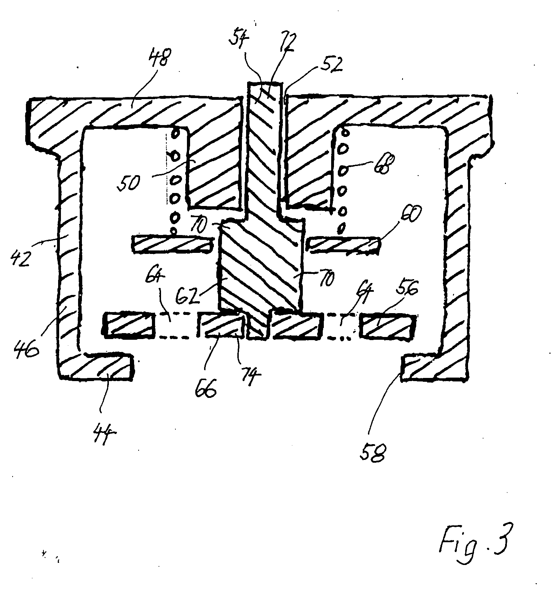

Abschließend soll eine zweite Ausführungsform der Erfindung anhand von Fig. 3 beschrieben werden.

Bei dieser Ausführungsform ist ein echtes Ventilgehäuse 42 vorgesehen, dessen Boden 44 die erfindungsgemäße Trennwand bildet. Von dem Boden 44 geht eine zylindrische Gehäusewand 46 aus, die auf der dem Boden gegenüberliegenden Seite durch einen Steg 48 überbrückt wird. Dieser Steg 48 kann eine beliebige Form aufweisen. Er kann beispielsweise mehrarmig sein, also etwa sternförmig oder auch aus einem schmalen einfachen Steg bestehen. Im Zentrum weist der Steg 48 einen zylindrischen Ansatz 50 auf, in dessen Zentrum sich eine als Bohrung ausgebildete Führung 52 für einen axial verschiebbaren Schaft 54 befindet. Der Schaft 54 ist auf der Seite des Bodens 44 des Ventilgehäuses 42 mit einer ersten Ventilplatte 56 verbunden, die eine Durchlaßöffnung 58 in den Boden 44 des Ventilgehäuses je nach Stellung freigibt oder verschließt. Die fest mit dem Schaft 54 verbundene Ventilplatte 56 kann diese Bewegung beim Öffnen und Schließen durchführen, indem sich der Schaft 54 in der Führung 52 verschiebt.

Die Verhältnisse liegen also hier anders herum als bei der ersten Ausführungsform, da der Schaft 54 nicht gestellfest angeordnet sondern mit der ersten Ventilplatte 56 fest verbunden ist.

Wie bei der ersten Ausführungsform, liegt auf der ersten Ventilplatte 56 eine zweite Ventilplatte 60. die auf einem Abschnitt größeren Durchmessers, der mit 62 bezeichnet ist, auf dem Schaft 54 axial verschiebbar geführt ist. Die zweite Ventilplatte 60 dient zum Verschließen einer Anzahl von in einem konzentrischen Kreis angeordneten Öffnungen 64 in der ersten Ventilplatte 56. wie sie bei der ersten Ausführungsform der Erfindung ebenfalls vorhanden sind. Da die einzelnen Durchlaßöffnungen 64 im Umkreis verteilt sind, aber Abstände zueinander aufweisen, wird im Zentrum der ersten Ventilplatte eine Art von Steg 66 belassen der die Möglichkeit der Befestigung des Schafts 54 an der ersten Ventilplatte 56 bietet. Auch in diesem Fall soll der Begriff des Steges in einem weiten Sinne verstanden werden und auch mehrarmige Verbindungen einschließen.

Die zweite Ventilplatte 60 wird mithilfe einer Schraubendruckfeder 68 in Richtung der ersten Ventilplatte 56 vorgespannt, und beide Ventilplatten 56,60 gemeinsam werden durch die Schraubendruckfeder in Richtung des Bodens 44 des Ventilgehäuses 42 gedrückt. Nur durch den Strömungsdruck können die beiden Ventilplatten 56,60 von ihren jeweiligen DurchlaBöffnungen 58,64 abgehoben werden.

Auch bei der zweiten Ausführungsform wird der Strömungswiderstand erheblich verringert, da das von unten nach oben in Fig. 3 strömende Wasser nur zum Teil außen um die erste Ventilplatte 56 herum strömen muß, sondern sich zum Teil noch durch die erste Ventilplatte 56 hindurchbewegen kann.

Auch bei dieser Ausführungsform sind verschiedene Abwandlungen durchaus möglich und sollen hier eingeschlossen werden. So kann beispielsweise anstelle der gemeinsamen Schraubendruckfeder 68 für jede der beiden Ventilplatten 56,60 eine gesonderte Feder zum Vorspannen in die Schließrichtung vorgesehen sein. Der im Durchmesser relativ große Abschnitt 62 des Schafts 54 weist einen Absatz 70, von dem aus nach oben ein Abschnitt 72 kleineren Durchmessers folgt, der in der Führung 52 verschiebbar ist. Auch hier bestehen Möglichkeiten einer anderen Gestaltung.

Am unteren Ende in Fig. 3 ist der Schaft 54 stark verjüngt, so dass hier ein Abschnitt mit Außengewinde zur Befestigung in der ersten Ventilplatte 56 gebildet wird. Dieser Abschnitt wird mit 74 bezeichnet.

Der Weg der ersten Ventilplatte kann durch Anschläge an der Innenwand des Ventilgehäuses begrenzt werden.

Die Durchmesser der einzelnen Abschnitte des Schafts 54 können anders gewählt sein, so dass beispielsweise unterschiedliche Wege für die erste und zweite Ventilplatte 56,60 festgelegt werden können.

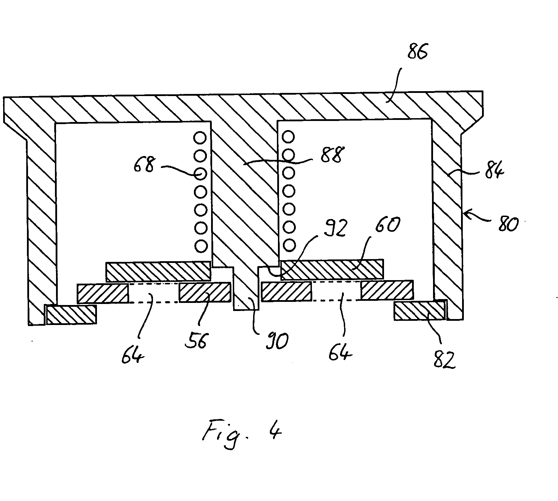

Fig. 4 zeigt eine dritte Ausführungsform der Erfindung, die eine Abwandlung der im Zusammenhang mit Fig. 3 beschriebenen zweiten Ausführungsform darstellt.

Hier ist ein Ventilgehäuse 80 vorgesehen, dessen Boden 82 zur Bildung der Trennwand durch einen Ring gebildet wird, der in die zylindrische Gehäusewand 84 eingepreßt ist. Auf der dem Boden gegenüberliegenden Seite weist das Ventilgehäuse 80 auch hier einen Steg 86 auf, der die gegenüberliegenden Seiten der Gehäusewand 84 überbrückt und ähnlich ausgebildet sein kann wie in Fig. 3. Im Unterschied zu Fig. 3 ist im Zentrum dieses Stegs 86 jedoch ein zylindrischer Ansatz 88 vorgesehen der sich in Richtung des Bodens 82 erstreckt und an dessen Ende ein Schaft 90 ausgebildet ist. Gegenüber Fig. 3 ist der Schaft 90 somit nicht axial verschiebbar, sondern einstükkig mit dem zylindrischen Ansatz 88 ausgeformt.

Auf dem Schaft 90 ist die erste Ventilplatte 56 angeordnet, und zwar derart, dass sie axial auf dem Schaft 90 zwischen dem Boden 82, der als unterer Anschlag für die Bewegung der ersten Ventilplatte 56 dient, und der Abstufung 92 zwischen dem Schaft 90 und dem zylindrischen Ansatz 88 gleiten kann. Die erste Ventilplatte 56 bewegt sich somit nicht gemeinsam mit dem Schaft 90, sondern auf diesem in axialer Richtung.

Die zweite Ventilplatte 60 liegt in der bereits beschriebenen Weise auf der ersten Ventilplatte 56 auf, so dass sie die Durchlassöffnungen 64 in der ersten Ventilplatte 56 in der Auflageposition verschließen kann. Die zentrale Öffnung 94 in der zweiten Ventilplatte 60 weist hier einen größeren Durchmesser auf als die zentrale Öffnung in der ersten Ventilplatte 56 zur Aufnahme des Schafts 90, so dass die zweite Ventilplatte 60 über den zylindrischen Ansatz 88 hinweggleiten kann und sich somit weiter nach oben verschieben kann als die erste Ventilplatte 56, die an der Abstufung 92 zur unteren Begrenzung des zylindrischen Ansatzes 88 anschlägt.

Beide Ventilplatten 56,60 werden durch eine Schraubendruckfeder 68, die den zylindrischen Ansatz 88 umwindet, in Richtung des Bodens 82 gedrückt. In der drucklosen Stellung liegt die erste Ventilplatte 56 am Innenrand des Bodens 82 an, und die zweite Ventilplatte 60 liegt auf der ersten Ventilplatte 56 auf und verschließt deren. Durchlassöffnungen 64. Gegen den Strömungsdruck können die beiden Ventilplatten 56,60 gegen den Druck der Schraubendruckfeder 68 angehoben werden. Die zweite Ventilplatte 60 kann hierbei weiter angehoben werden als die erste Ventilplatte 56, und zwar über die Höhe der Abstufung 92 am zylindrischen Ansatz 88 hinaus, so dass die Durchlassöffnungen 64 problemlos freigegeben werden können.

Während bei der vorstehend beschriebenen Ausführungsform der obere Anschlag für die erste Ventilplatte 56 durch die Abstufung 92 zwischen dem Schaft 90 und dem zylindrischen Ansatz 88 gebildet wird, der einen größeren Durchmesser aufweist als der Schaft 90. kann dieser Anschlag auch am Rand der ersten Ventilplatte 56 durch eine Abstufung in der Gehäusewand 84 nach innen gebildet werden. In diesem Fall ist es möglich, auf die Abstufung 92 am zylindrischen Ansatz 88 zu verzichten, so dass dieser bis zum unteren Schaftende einen konstanten Durchmesser aufweist. Die Öffnungen in der ersten Ventilplatte 56 und in der zweiten Ventilplatte 60 können dann gleich groß ausgebildet sein.

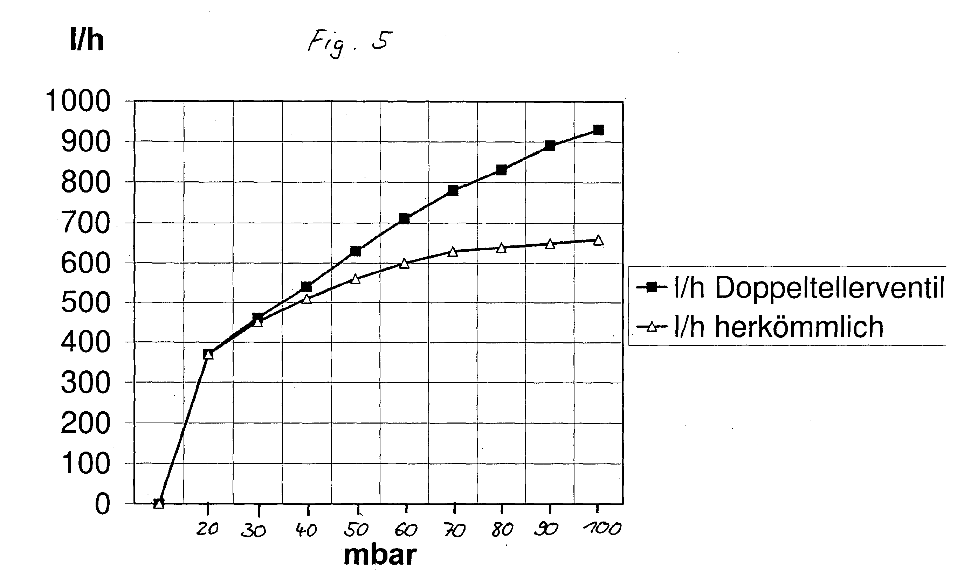

Fig. 5 ist ein Druckverlustdiagramm zu Erläuterung der Wirkung des erfindungsgemäßen Rückschlagventils. In dem Diagramm in Fig. 5 ist auf der horizontalen Abszisse der Druckverlust in Millibar (mbar) aufgetragen, während auf der senkrechten Ordinate die Durchflußwerte in Litern pro Stunde (1/h) aufgetragen sind. Die beiden Kurvenverläufe entsprechen einem herkömmlichen Ventil (mit hellen Dreiecken gekennzeichnet) und dem erfindungsgemässen Doppeltellerventil (mit ausgefüllten Quadraten markiert).

In einem steil ansteigenden Kurvenbereich bis 20 mbar weisen beide Ventile die gleiche Durchflußcharakteristik auf, d. h. die entsprechenden Kurvenabschnitte liegen aufeinander. Oberhalb eines Druckverlustes von 20 mbar kommt es zu einem Auseinanderdriften der beiden Kurven. Ab diesem Punkt weist das herkömmliche Ventil einen flachen Kurvenverlauf auf und erreicht einen maximalen Durchfluß von ca. 620 1/h. Hingegen erreicht das erfindungsgemäße Doppeltellerventil bei gleichem Druckverlust von 100 mbar einen Durchfluß von ca. 930 1/h, mit steigender Tendenz zu noch höheren Druckverlustwerten, die in der Figur nicht dargestellt sind.

Die Ursache für dieses Durchflußverhalten liegt darin begründet, dass bei einem Druckverlust von ca. 20 mbar die zweite Ventilplatte 34 gegenüber der Ventilplatte 30 angehoben wird und die zusätzlichen Durchlaßöffnungen 38 geöffnet werden. Hierdurch wird der Druckverlust beim Durchströmen des Ventils reduziert, und der Strömungsverlauf wird geradliniger. Somit kann bei steigendem Druckverlust der Durchfluß durch das erfindungsgemäße Rückschlagventil noch weiter ansteigen, während der Durchfluß für ein herkömmliches Ventil schnell begrenzt wird und sich bereits bei vergleichsweise niedrigen Druckverlustwerten seinem Maximalwert nähert. Es ist daher offensichtlich, dass die bei einem herkömmlichen Ventil auftretende Drosselwirkung durch die zusätzliche Ventilplatte 34 erheblich entschärft wird.

## Patentansprüche

1. Rückschlagventil mit einer Trennwand (10) in einem durchströmten Ventilgehäuse, welche Trennwand eine Durchlaßöffnung (12) aufweist, die durch eine federnd in Schließrichtung vorgespannte und durch Strömungsdruck von der Trennwand abhebbare Ventilplatte (30) verschließbar ist. **dadurch gekennzeichnet, dass** die Ventilplatte (30) in ihrer Fläche eine weitere Öffnung (38) aufweist, die durch eine federnd gegen die Ventilplatte (30) vorgespannte, von der Ventilplatte (30) durch Strömungsdruck abhebbare zweite Ventilplatte (34) verschließbar ist.

2. Rückschlagventil nach Anspruch 1, **dadurch gekennzeichnet, dass** die erste und zweite Ventilplatte (30,34) kreisförmig und konzentrisch zueinander angeordnet sind und auf einem gemeinsamen Schaft (16) verschiebbar geführt sind.

3. Rückschlagventil nach Anspruch 2. **dadurch gekennzeichnet, dass** der Schaft (16) in einem die erste Durchlaßöffnung (12) überbrückenden Steg verankert ist und sich in stromabwärtiger Richtung erstreckt.

4. Rückschlagventil nach Anspruch 3, **dadurch gekennzeichnet, dass** die Ventilplatten (30,34) durch eine gemeinsame Schraubenfeder auf dem Schaft in Richtung der Schließstellung vorgespannt sind.

5. Rückschlagventil nach Anspruch 4. **dadurch gekennzeichnet, dass** der Schaft (16) an seinem stromabwärtigen Ende ein Kopfstück größeren Durchmessers aufweist, an dem sich die Feder (32) abstützt.

6. Rückschlagventil nach einem der Ansprüche 4 oder 5. **dadurch gekennzeichnet, dass** der Schaft (16) an seinem dem Kopfstück (18) gegenüberliegenden Ende einen Gewindeabschnitt (20) aufweist, mit dessen Hilfe er auf dem Steg in der ersten Durchlaßöffnung (12) festgelegt ist.

7. Rückschlagventil nach Anspruch 1, **dadurch gekennzeichnet, dass** die Trennwand durch den Boden (44) eines Ventilgehäuses (42) gebildet wird.

8. Rückschlagventil nach Anspruch 7, **dadurch gekennzeichnet, dass** das Ventilgehäuse (42) in dem Boden (44) eine Durchlaßöffnung (58) aufweist, die durch die erste Ventilplatte (56) verschließbar ist.

9. Rückschlagventil nach Anspruch 7, **dadurch gekennzeichnet, dass** das Ventilgehäuse (42) auf der dem Boden (44) gegenüberliegenden Seite durch einen Steg (48) überbrückt ist. in dem ein Schaft (54) verschiebbar ist, der mit einer ersten, die Durchlaßöffnung (58) im Boden (44) verschließende Ventilplatte (56) verbunden ist.

10. Rückschlagventil nach Anspruch 9. **dadurch gekennzeichnet, dass** die erste Ventilplatte (56) Durchlaßöffnungen (64) aufweist, die durch eine zweite Ventilplatte (60) verschließbar sind.

11. Rückschlagventil nach Anspruch 10, **dadurch gekennzeichnet, dass** die beiden Ventilplatten (56,60) durch eine Feder (68) in Richtung ihrer Schließstellung vorgespannt sind.
